Europäisches Patentamt

European Patent Office

Office européen des brevets

(11) Veröffentlichungsnummer : **0 007 463**
**B1**

(12) **EUROPÄISCHE PATENTSCHRIFT**

(45) Veröffentlichungstag der Patentschrift :
21.10.81

(51) Int. Cl.³ : **A 61 C 17/02, A 61 C 1/10,
A 61 C 3/02, A 61 L 2/16,
B 05 B 15/00**

(21) Anmeldenummer : 79102199.1

(22) Anmeldetag : 30.06.79

(54) **Vorrichtung zur Beaufschlagung einer Wundfläche mit einer sterilen Kühl- und/oder Spülflüssigkeit.**

(30) Priorität : 04.07.78 DE 2829271

(43) Veröffentlichungstag der Anmeldung :
06.02.80 (Patentblatt 80/03)

(45) Bekanntmachung des Hinweises auf die Patenterteilung : 21.10.81 Patentblatt 81/42

(84) Benannte Vertragsstaaten :
AT CH FR NL SE

(56) Entgegenhaltungen :
AT - B - 132 546
DE - A1 - 2 450 320
DE - A1 - 2 614 776
DE - U - 1 783 849
US - A - 2 696 669

DIE QUINTESSENZ, Heft 12, Referat Nr. 5366,
Dezember 1975, Berlin
R. BAUMANN « Die sterile Spraymatic »
Seiten 11 und 12

(73) Patentinhaber : Scheicher, Hans, Dr.
Rondell Neuwittelsbach 4
D-8000 München 19 (DE)

(72) Erfinder : Scheicher, Hans, Dr.
Rondell Neuwittelsbach 4
D-8000 München 19 (DE)

(74) Vertreter : Diehl, Hermann O. Th., Dr. et al
Flüggenstrasse 17
D-8000 München 19 (DE)

Imprimerie Jouve, 17, rue du Louvre, 75001 Paris, France

## Vorrichtung zur Beaufschlagung einer Wundfläche mit einer sterilen Kühl- und/oder Spülflüssigkeit

Die Erfindung betrifft eine Vorrichtung zur Beaufschlagung einer Wundfläche, insbesondere im Oralbereich, mit einer sterilen Kühl- und/oder Spülflüssigkeit, mit einem Vorratsgefäss, in dem die Flüssigkeit von Druck beaufschlagt wird, sowie mit einer Leitung, die von dem Vorratsgefäss zu einem Handstück führt.

In der zahnärztlichen Praxis werden in kleiner Anzahl auch chirurgische Eingriffe durchgeführt, z.B. Entfernen von Wurzelresten, Weisheitszähnen und Einsetzen von Implantaten, bei denen Knochengewebe abgetragen wird. Diese chirurgischen Eingriffe sind relativ selten, so dass die in der normalen Praxis vorhandenen Versorgungsgeräte zum Betrieb der Bohrhandstücke nicht speziell ausgerüstet sind. Andererseits sind diese Eingriffe aber nicht so schwerwiegend, dass ein Klinikaufenthalt notwendig ist. Es ist völlig ausreichend, wenn diese Eingriffe unter sterilen Bedingungen ausgeführt werden und die Frässtelle genügend gekühlt wird, damit die Wunde gut ausheilen kann.

Die herkömmlichen Bohrhandstücke werden auf einen Motor aufgesetzt, der über einen Mehrkanalschlauch von einem Versorgungsgerät mit einem Antriebsmedium (Strom oder Druckluft) sowie Spraywasser und Sprayluft versorgt wird. Sowohl Spraywasser als auch Sprayluft werden aus dem normalen Wasser- bzw. dem installierten Druckluftnetz entnommen und gefiltert, nicht jedoch entkeimt.

Des weiteren sind die bekannten Geräte so ausgeführt, dass beim Abschalten derselben das an der Austrittsöffnung befindliche Spraywasser automatisch vom Bohrhandstück zurückgesaugt wird. Das bringt für den Zahnarzt den Vorteil, dass das Handstück nicht nachtropft, was seine Arbeit sehr erleichtert. Andererseits können aber Speichelreste sowie Keime aus dem Mund des Patienten in das Handstück angesaugt und beim nächsten Einschalten wieder ausgeblasen werden. Diesem Nachteil kann nur unvollständig dadurch begegnet werden, dass man das Handstück sterilisiert, da sehr oft bis in den Verbindungsschlauch zurückgesaugt wird.

Weiterhin ist zu berücksichtigen, dass das Wasser oft längere Zeit in den Leitungen des Versorgungsgerätes steht. Es ist allgemein bekannt, dass sich Keime in stehendem Wasser sehr schnell vermehren. Hieraus folgt, dass sich das vom Versorgungsgerät gelieferte Spraywasser nicht zum sterilen Kühlen der Wundfläche bei chirurgischen Arbeiten eignet.

Beim chirurgischen Arbeiten wird oft von einer Helferin derart assistiert, dass mit einem Spritzhandstück die Bohrstelle zusätzlich oder ausschliesslich gekühlt wird. Für diese Unterstützung steht der Helferin normalerweise ein Mehrfunktionshandstück als Spritzhandstück zur Verfügung, das über einen Mehrkanalschlauch mit dem Grundgerät verbunden und ebenfalls von diesem versorgt wird. In der Regel stehen Luft und Wasser an diesem Handstück an, das meist zwei Tasten zur Freigabe dieser Medien aufweist. So wird beispielsweise beim Drükken der linken Taste nur der Luftweg, beim Drücken der rechten Taste nur der Wasserweg freigegeben, so dass je nach Tastenbetätigung Luft und/oder Wasser austreten.

Die bekannten Mehrfunktionshandstücke sind geräteseitig meist ebenfalls so ausgestaltet, dass beim Abschalten insbesondere des Wasserkanals das Wasser zurückgesaugt wird. Es steht daher auch hier keine sterile Kühlflüssigkeit zur Verfügung, da sich in dem stehenden, oft über Boiler zusätzlich erwärmten Wasser die Keime rasch vermehren können, die — wie im vorstehend erwähnten Fall — beim Zurücksaugen über den Verbindungsschlauch eintreten.

Zur Abhilfe dieser Mängel wurden Vorrichtungen entwickelt, die jedoch alle mit Nachteilen behaftet sind. Bekannt sind Zusatzgeräte, die vor oder hinter dem Versorgungsgerät angeschlossen werden können und aus einem Vorratsgefäss eine sterile physiologische oder ähnliche Kochsalzlösung, z.B. Blutersatzlösung, durch die Schläuche des Versorgungsgerätes zum Bohrhandstück leiten. Als Druckmittel werden entweder normale Druckluft oder eine Pumpe verwendet. Steriles Arbeiten ist jedoch auch hiermit nicht möglich, weil durch die Belüftung des Vorratsbehälters der Inhalt kontaminiert werden kann. Durch die Verwendung einer Druckluftquelle ist die Einheit ferner weitgehend ortsgebunden und daher für portable Zwecke wenig geeignet.

Des weiteren ist eine Anordnung bekannt, bei der eine Flasche mit steriler Kochsalzlösung — ähnlich einer Infusionsflasche — hochgehängt wird. Die sterile Flüssigkeit wird durch die Schwerkraft über einen sterilen Schlauch zum Bohrhandstück geleitet. Da die sterile Flüssigkeit ohne Druck austritt, wird sie durch die Rotation der Bohrer weggeschleudert und kann daher nicht an die zu kühlende Stelle gelangen. Ein weiterer Nachteil besteht in dem benötigten Ständer oder Gestell, das meist unbenutzt herumsteht und Platz beansprucht. Auch für die neuerdings and Bedeutung gewinnende Innenkühlung der Fräser (s. DE-AS-23 31 023) ist diese Methode ungeeignet, da das Kühlmedium zu wenig Druck aufweist. Gänzlich ungeeignet ist diese Methode zur Versorgung eines Spritzhandstücks für die Helferin, weil hier ein Druck von mindestens 1 bis 2 bar, vorzugsweise jedoch 2 bis 3 bar benötigt wird, um aus einer gewissen Entfernung an die Wundfläche spritzen zu können.

Der vorliegenden Erfindung liegt daher die Aufgabe zugrunde, eine Vorrichtung der eingangs genannten Art hinsichlich Sterilität und der Möglichkeit eines portablen Einsatzes des Geräts bei zentraler Gerätesteuerung vom Handstück selbst her zu verbessern.

Diese Aufgabe wird erfindungsgemäss dadurch gelöst, dass eine beliebig anbringbare und unabhängige Druckgasdose das Vorratsgefäss bildet, an der ein Adapter anbringbar ist, der so ausgebildet ist, dass er bei Verbindung mit der Druckgasdose unter Druckreduzierung das Ventil der Druckgasdose öffnet, und dass zwischen dem Adapter und dem Handstück oder im Handstück ein Absperrventil vorgesehen ist, durch dessen Betätigung die Flüssigkeit dosiert freisetzbar ist.

Die Erfindung ermöglicht eine in einem portablen Gerät einsetzbare Vorrichtung zur Behandlung einer Wundfläche, auf die durch diese Behandlung keine Keime gelangen. Ausserdem kann die Versorgung der Wundfläche mit der Kühl- und/oder Spülflüssigkeit vom Handstück selbst angesteuert werden, da das Absperrventil zwischen dem Adapter und dem Handstück, also gegebenenfalls in unmittelbarer Nähe des Handstücks oder im Handstück selbst vorgesehen ist.

Als Druckgasdose wird vorzugsweise eine Dose verwendet, wie sie bei der Spraydosenherstellung üblich ist. Solche Dosen bestehen aus einem Behälter mit einem Ventilteller, welche nach der Befüllung absolut dicht durch Bördelung verschlossen werden. Das bedeutet, dass nach dem Verschliessen wegen des bestehenden Innendrucks keine Kontaminierung mehr erfolgen kann, wenn bei der Befüllung der Wirkstoff und das Druckgas steril eingebracht werden.

Erfahrungsgemäss wird bereits bei einer normalen Befüllung, die nicht unter völlig sterilen Bedingungen vor sich geht, der Wirkstoff bzw. das Gas nur sehr geringfügig kontaminiert. Wird deshalb dem Wirkstoff ein sogenanntes Kaltentkeimungsmittel in sehr geringer Konzentration beigegeben, das die geringe Anzahl der Keime nach dem Verschliessen der Dose abtötet, so wird die absolute Sterilität des Wirkstoffs und des Druckgases gewährleistet, ohne dass die Dosenbefüllung selbst in absolut steriler Atmosphäre erfolgen muss. Der Anteil dieses Wirkstoffs beträgt weniger als 1 Prozent. Der Wirkstoff hat die Eingenschaft, dass er sich in wässerigen Lösungen in $H_2O$ und $CO_2$ aufspaltet, dh. in Stoffe, die Bestandteile des Doseninhalts sind.

Soll das Handstück als Spritzhandstück verwendet werden, ist es vorteilhafterweise so gestaltet, dass die sterile Flüssigkeit nicht mit Teilen des Handgriffs in Berührung kommt. Dies geschieht dadurch, dass die flexible Leitung, gegebenenfalls vom Nippel des Adapters kommend, in einem Kanal durch das ganze Handstück geführt wird. Das Handstück besteht dabei aus einer Hülse mit an beiden Enden verjüngten Öffnungen, welche dem Durchmesser der flexiblen Leitung entsprechen. Im Mittelteil ist der Kanal erweitert. Hiert ist eine als Ventil wirkende Klemmvorrichtung angebracht, die von einem Hebelsystem gebildet ist, mit dem der Kühlmittelfluss gestoppt bzw. freigegeben werden kann, in dem es die Leitung abklemmt oder freigibt. Die flexible Leitung endet in der Spitze, wo sie gleichzeitig als Kupplung für verschiedenartig geformte Ansatzstücke, insbesondere sehr dünne Kanülen ausgeführt ist. Auf diese Weise können auch enge Spalte, tiefe Öffnungen etc. im Kieferknochen mit sterilem Medium ausgespült oder beim Fräsen zusätzlich gekühlt werden.

Die beiliegende Zeichnung bevorzugter Ausführungsbeispiele dient der weiteren Erläuterung der Erfindung.

Fig. 1 zeigt in perspektivischer Ansicht eine Druckgasdose ;

Fig. 2 zeigt in perspektivischer Ansicht die Druckgasdose von Fig. 1 mit einem aufgesetzten Flansch ;

Fig. 3 zeigt im Schnitt eine Ausführungsform eines Adapters für eine Druckgasdose ;

Fig. 4 zeigt im Schnitt die Ausführungsform des Adapters für die Druckgasdose, wenn dieser mittels strichpunktiert angedeuteter Leitungen an ein Bohrhandstück und ein Spritzhandstück angeschlossen ist ;

Fig. 5 zeigt ein Bohrhandstück und ein Spritzhandstück, welche mittels strichpunktiert angedeuteter flexibler Zuleitungen an den Adapter von Fig. 4 angeschlossen sind ;

Fig. 6a zeigt einen Längsschnitt des in Fig. 5 dargestellten Spritzhandstücks ;

Fig. 6b zeigt eine Seitenansicht des Spritzhandstücks von Fig. 6a ; und

Fig. 7a bis 7c zeigen verschiedenartige Ansatzstücke für eine Halterung in dem Spritzhandstück der Fig. 6a und 6b.

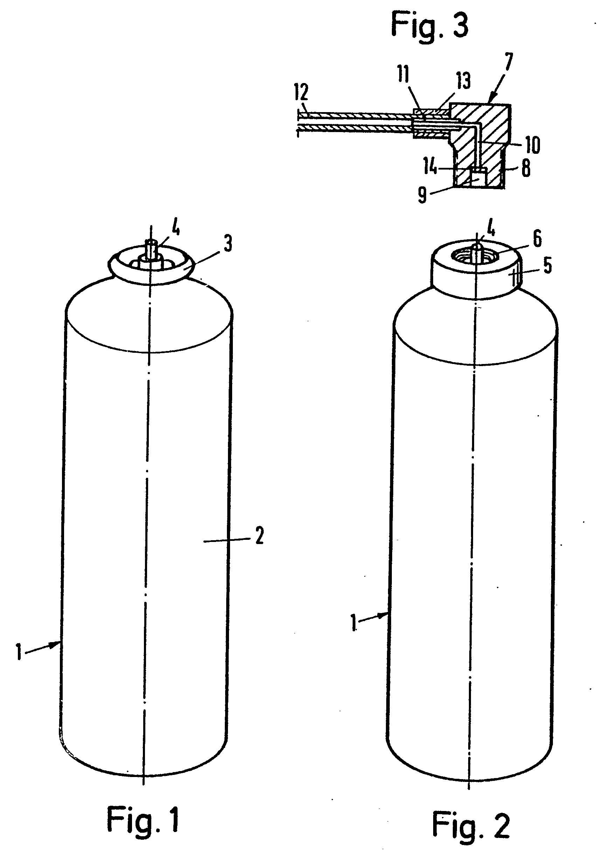

Die in Fig. 1 gezeigte Druckgasdose 1 besteht aus einem flaschenartigen Behälter 2, dessen obere Öffnung mit einem Ventilteller 3 und dem daran befestigten Ventil verschlossen ist, von dem lediglich ein Stem 4 gezeigt ist, der im Falle eines Eindrückens das in Innern der Druckgasdose befindliche und unter Druck eines Treibgases stehende Fluid durch die Mittelbohrung des Stems austreten lässt. Fig. 2 zeigt die Druckgasdose 1 mit einem auf den Ventilteller 3 aufgesetzten Flansch 5, der eine konzentrische Innenbohrung 6 aufweist, welche mit einem Innengewinde versehen ist.

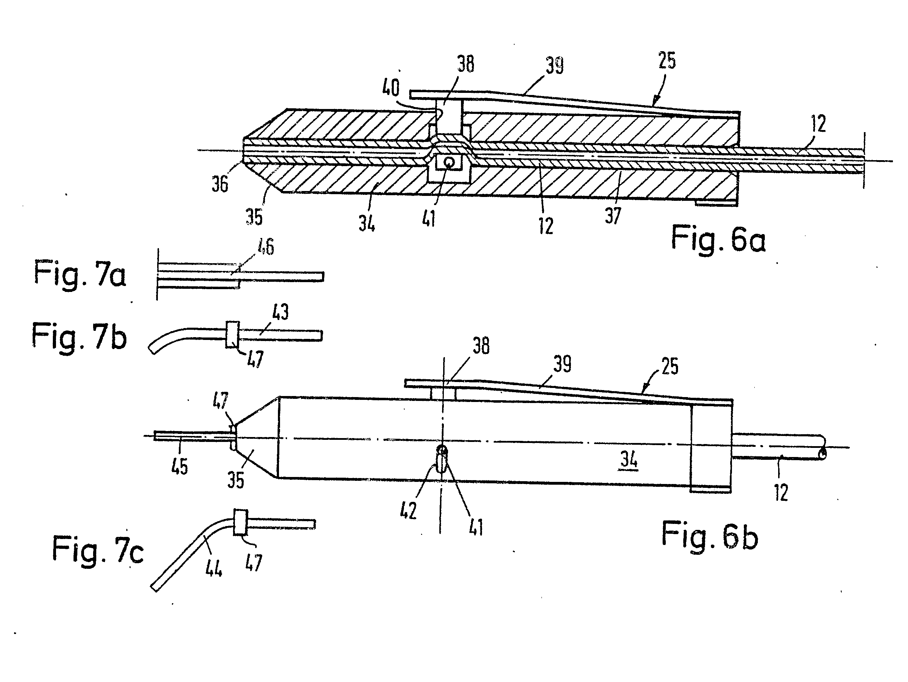

Fig. 3 zeigt eine Ausführungsform eines Adapters 7, der in Form eines Nippels ausgebildet ist, welcher in seinem unteren Ende ein Aussengewinde 8 trägt, mittels dessen der Adapter 7 in die Bohrung 6 des Flansches 5 einschraubbar ist. An der Unterseite des Nippels befindet sich eine sacklochartige Bohrung 9, welche so dimensioniert ist, dass sie über den Nippel 4 geschoben werden kann. Am oberen Ende mündet in die Bohrung 9 eine Durchgangsbohrung 10, die einen kleineren Querschnitt aufweist als die Bohrung 9. Die Durchgangsbohrung 10 endet in einem Stutzen 11, auf dem eine flexible Zuleitung 12 aufgeschoben und mittels einer Hülse 13 gesichert ist. In die Bohrung 9 ist des weiteren ein ringförmiges Dichtelement eingesetzt, an das sich die Oberseite des Stems 4 anlegt, wenn der Adapter 7 auf den Flansch 5 aufgeschraubt wird. Die Tiefe der Bohrung 9 ist derart gewählt, dass bei dem Einschrauben des Adapters 7 auf den Flansch 5 der Stem 4 niedergedrückt und damit das Ventil im Innern der Dose geöffnet wird. Durch den verminderten Querschnitt der Durchgangsbohrung 10 und gegebenenfalls in die Bohrung eingebrachte Widerstandsmitttel lässt sich ein Druckabfall im Adapter 7 erzielen, durch welchen gewährleistet ist, dass das Fluid jeweils mit gleichem Druck am Verbraucher anliegt. Bei Verwendung des in Fig. 3 gezeigten Adapters sollte in der Leitung 12 oder in dem an diese angeschlossenen Handstück ein zusätzliches Absperrventil vorgesehen sein. Ein Beispiel eines derartigen Absperrventils ist in Fig. 6 dargestellt, auf die im folgenden noch näher eingegangen wird.

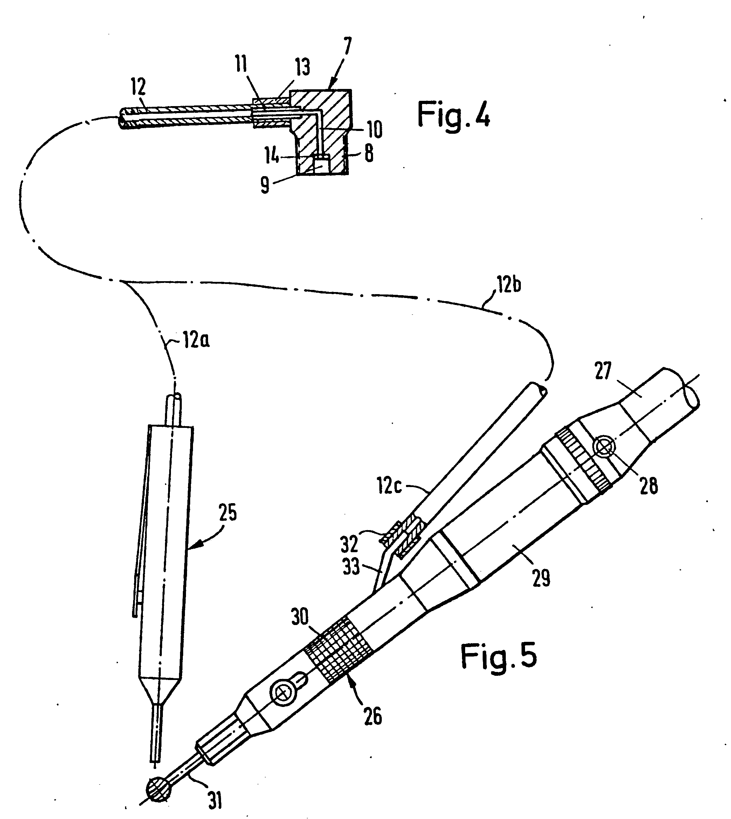

Wie in den Fig. 4 und 5 dargestellt ist, strömt aus dem Adapter 7 die Flüssigkeit über die Leitung 12, welche sich, wie durch die Bezugszeichen 12a und 12b angedeutet, in mehrere Einzelleitungen verzweigen kann, zu Handstücken 25 und 26.

Fig. 5 zeigt ein beispielshalber elektrisch betriebenes Bohrhandstück 26. Es besteht aus einem Mehrkanalschlauch 27 mit einem Sprayaustritt 28, einem Motor 29 sowie einem Handstück 30 und einem von diesem gehaltenen Fräser 31. Das über die Zuleitung 12, 12b zugeführte Fluid tritt über das mit einem Ansatz 32 versehene Endstück 12c in ein Anschlussrohr 33 ein, welches an dem Handstück 30 gehaltert ist oder einen Teil desselben bildet. Von dem Anschlussrohr 33 führt ein nicht dargestelltes Röhrchen entweder aussen am Handstück entlang oder im Innern desselben bis zu dem Fräser 31. Im Falle eines mit Innenspülung versehenen Fräsers mündet das Röhrchen in den Zuführungskanal für den Fräser. Die Sprayaustrittsöffnung 28 wird im vorliegenden Falle auf Grund des von ihr austretenden unsterilen Wassers nicht benutzt.

Ein Kühlen und/oder Spülen der jeweiligen Bohr- oder Wundfläche kann unabhängig von der vorstehend beschriebenen Spülung über das Bohrhandstück oder zusätzlich zu dieser über das Spritzhandstück 25 erfolgen. Das Spritzhandstück 25 besteht wie aus den Figuren 6a und 6b hervorgeht, aus einer Hülse 34, die in einer Spitze 35 mündet, an der sich die Austrittsöffnung 36 für das Fluid befindet. Die Hülse 34 wird in Längsrichtung von einem Kanal 37 durchsetzt, welchen die flexible Leitung 12 durchsetzt, wobei sie im Bereich der Austrittsöffnung 36 ausmündet. Die Hülse enthält eine Klemmvorrichtung, welche die flexible Leitung 12 so abklemmt, daß kein Fluid aus ihr austreten kann. Die Klemmeinrichtung besteht im dargestellten Falle aus einem Taster 38, der von einer außen an der Hülse 34 befestigten und sich längs derselben erstreckenden Feder 39 vom Handstück weggedrückt wird. Der Taster erstreckt sich durch eine die Seitenwandung der Hülse 34 durchsetzende Ausnehmung 40 ins Innere der Hülse. An seinem unteren Ende ist ein Stift 41 vorgesehen, der in einer quer durch das Handstück verlaufenden Längsnut 42 verschieblich geführt ist und derart unter die flexible Leitung 12 zu liegen kommt, daß er diese, wie in Fig. 6a angedeutet, abklemmt, solange der Taster 38 durch die Feder 39 nach außen gedrückt ist. Erst durch ein Eindrücken des Tasters entgegen der Kraft der Feder 39 wird die Durchgangsbohrung der Zuleitung 12 freigegeben, so daß das Fluid am Ende 36 des Spritzhandstückes austreten kann.

Das in der Austrittsöffnung 36 befindliche Endstück der flexiblen Zuleitung 12 dient als Kupplung für verschieden geformte dünne Ansatzstücke. Beispiele dieser Ansatzstücke sind die in den Figuren 7b und 7c gezeigten Kanülen 43 und 44, die in Fig. 6b von der Spitze 35 aufgenommene Kanüle 45 oder der in Fig. 7a dargestellte Adapter 46. Mittels des Adapters 46 gelingt es, das Spritzhandstück 25 als handbetätigtes Ventil zwischen die Druckgasdose 1 und das Bohrhandstück 26 zu schalten. Die Kanülen 43, 44 und 45 können mit einem Anschlag 47 versehen sein, der verhindert, daß sie zu tief in das Spritzhandstück hineingeraten.

Die beschriebene Kupplungsart hat den weiteren Vorteil, daß die Kanülen oder Ansatzstücke in beliebiger Orientierung eingesetzt werden können. Um einen guten Halt der Einsatzstücke in dem Spritzhandstück 25 zu gewährleisten sind die in die Bohrung der Zuleitung 12 eingeführten Enden der Ansatzstücke und/oder die Austrittsöffnung 36 leicht konisch ausgebildet.

Die Adapter, die Zuleitungen, die Handstücke und die Ansatzstücke, sowie die Kanülen sind aus einem Material gefertigt, das ein einfaches Sterilisieren dieser Teile ermöglicht.

**Ansprüche**

1. Vorrichtung zur Beaufschlagung einer Wundfläche, insbesondere im Oralbereich, mit einer sterilen Kühl- und/oder Spülflüssigkeit, mit einem Vorratsgefäss, in dem die Flüssigkeit vom Druck beaufschlagt wird, sowie mit einer Leitung, die von dem Vorratsgefäss zu einem Handstück führt, dadurch gekennzeichnet, dass eine beliebig anbringbare und unabhängige Druckgasdose (1) das Vorratsgefäss bildet, an der ein Adapter (7) anbringbar ist, der so ausgebildet ist, dass er bei einer Verbindung mit der Druckgasdose (1) unter Druckreduzierung das Ventil der Druckgasdose (1) öffnet, und dass zwischen dem Adapter (7) und dem Handstück oder im Handstück ein Absperrventil (38-42) vorgesehen ist, durch dessen Betätigung die Flüssigkeit dosiert freisetzbar ist.

2. Vorrichtung nach Anspruch 1, dadurch gekennzeichnet, dass als Handstück ein Bohrhandstück (26) dient, das einen Anschluss (33) für die Leitung (12c) sowie Mittel zur Abgabe der Flüssigkeit in Richtung auf die Bohrstelle enthält.

3. Vorrichtung nach Anspruch 1, dadurch gekennzeichnet, dass die flexible Leitung (12) in einem Kanal (37) durch das eine Hülse (34) und eine Spitze (35) aufweisende Handstück (25) bis zur Spitze hin verläuft in welcher die Leitung (12) mit ihrem Ende in einer Austrittsöffnung (36) des Handstückes (25) ausmündet, wobei dieses Leitungsende als elastische Kupplung zur Aufnahme verschiedenartiger Ansatzstücke und Düsen (43, 44, 45) in der Spitze (35) gestaltet ist, und dass das im Handstücks (25) vorgesehene Absperrventil als handbetätigbare Klemmvorrichtung (38-42) ausgebildet ist, die im unbetätigten Zustand die flexible Leitung an einer Stelle des Kanales (37) abklemmt.

4. Vorrichtung nach einem der vorstehenden Ansprüche, dadurch gekennzeichnet, dass die Flüssigkeit eine kleine Zugabe eines Kaltentkeimungsmittels enthält.

## Claims

1. A device for supplying a sterile cooling and/or rinsing fluid to a wound surface, in particular in the oral region, said device comprising a supply vessel in which the fluid is pressurized and a conduit leading from the supply vessel to a hand-piece, characterized in that said supply vessel is formed by a self-contained compressed gas can (1) which can be positioned as desired and to which an adapter (7) can be fixed, said adapter (7) being so designed that while fastened to the compressed gas can (1) it opens the valve of the latter reducing at the same time the pressure, and that between said adapter (7) and the handpiece or within the hand-piece there is a shutoff valve (38-42), which releases the fluid in metered fashion when actuated.

2. Device according to claim 1, characterized in that a hand-held drilling unit (26) serves as handpiece, said (hand-held drilling unit) containing a connector (33) for the conduit (12 c) and means for dispensing the fluid towards the drilling site.

3. Device according to claim 1, characterized in that the flexible conduit (12) extends in a canal (37) through the hand-piece — which has a sleeve (34) and a tip (35) — to the jip of same, in which the conduit (12c) opens out at its end into an outlet aperture (36) of the hand-piece (25), this end of the conduit (12c) being designed as an elastic coupler for receiving attachments and nozzles (43, 44, 45) in the tip (35), and that the shutoff valve provided in the hand-piece (25) is designed as a hand-actuated clamping device (38-42) which, when not actuated, shuts off the flexible conduit at a point in the canal (37).

4. Device according to one of the preceding claims, characterized in that the fluid contains a small addition of cold-disinfecting-agent.

## Revendications

1. Dispositif d'application sur la surface d'une plaie, en particulier dans la zone orale, d'un liquide stérile de refroidissement et/ou de lavage, comprenant un récipient dans lequel le liquide est soumis à une pression ainsi qu'une conduite reliant le récipient à un appareil tenu à la main, caractérisé en ce qu'une recharge de gaz sous pression (1) indépendante et pouvant être montée à volonté constitue le récipient sur lequel on peut monter un raccord (7) constitué de manière que lorsqu'il est relié à la recharge sous pression (1), il ouvre la soupape de ladite recharge (1) par réduction de la pression, et en ce qu'entre le raccord (7) et l'appareil tenu à la main, ou dans cet appareil tenu à la main, est prévu un clapet d'arrêt (38-42) dont la manœuvre permet de libérer le liquide de façon dosée.

2. Dispositif selon la revendication 1, caractérisé en ce que l'appareil tenu à la main est constitué par une fraise (26) comprenant un raccordement (33) destinée à la conduite (12c) ainsi que des moyens pour envoyer le liquide en direction de la fraise.

3. Dispositif selon la revendication 1, caractérisé en ce que la conduite souple (12) passe dans un canal (37) de l'appareil tenu à la main (25), qui comprend une douille (34) et une pointe (35), jusqu'à la pointe dans laquelle la conduite (12) débouche par son extrémité dans une ouverture de sortie (36) de l'appareil tenu à la main (25), cette extrémité de la conduite étant constituée pour former un accouplement élastique permettant l'application d'accessoires et de buses de types divers (43, 44, 45) dans la pointe (35), et en ce que dans l'appareil tenu à la main (25), le clapet de fermeture qui y est prévu est constitué sous forme d'un dispositif de serrage (38-42) manœuvré à la main et qui serre la conduite souple en position dans le canal (37) quand elle n'est pas en condition de fonctionnement.

4. Dispositif selon l'une quelconque des revendications précédentes, caractérisé en ce que le liquide contient une petite quantité de substance germicide froide.

Fig. 3

Fig. 1

Fig. 2

Fig.4

Fig.5

Fig. 6a

Fig. 7a

Fig. 7b

Fig. 7c

Fig. 6b